# DEMANDE DE BREVET EUROPEEN

(11) **EP 4 799 832 A1**
(43) Date de publication de la demande: **02.09.2026**
(21) Numéro de dépôt: 26161087.7
(22) Date de dépôt: 26.02.2026
(51) Int. Cl.: B60G 15/06, B62D 25/08

(54) **ASSEMBLAGE POUR AMORTISSEUR DE VÉHICULE AUTOMOBILE**

(30) Priorité: 27.02.2025 FR 2501996
(71) Demandeur: Flexis, 92100 Boulogne Billancourt (FR)
(72) Inventeur: DELORD, Christian, 78640 VILLIERS-SAINT-FREDERIC (FR)
(74) Mandataire: Lavoix

(57) **Abrégé**

L'invention concerne un assemblage (210) pour amortisseur de véhicule automobile, comportant : un bloc filtrant (12), comprenant un bord externe (38) triangulaire ; une coupelle (14) d'amortisseur, comprenant une première portion périphérique (50) et une première portion centrale (52) ; encastrée autour du bord externe (38) du bloc filtrant (12) ; et un renfort supérieur (16), comprenant une deuxième portion périphérique (60) et une deuxième portion centrale (62).

Dans une configuration assemblée : la coupelle (14) est disposée entre le bloc filtrant (12) et le renfort supérieur (16) ; les première (50) et deuxième (60) portions périphériques sont au contact l'une de l'autre ; et les première (52) et deuxième (62) portions centrales sont au contact l'une de l'autre ;

Chacune des première (52) et deuxième (62) portions centrales comporte une zone de fixation (72, 82).

## Description

La présente invention concerne un assemblage pour amortisseur de véhicule automobile, du type comportant : un bloc filtrant, comprenant un corps sensiblement plan, ledit corps comprenant un bord externe formant sensiblement un triangle équilatéral ; une coupelle d'amortisseur, comprenant un fond de coupelle ; ledit fond comprenant une première portion périphérique et une première portion centrale, continues l'une par rapport à l'autre ; lesdites premières portions périphérique et centrale étant sensiblement planes, sensiblement parallèles entre elles et séparées par une première distance non nulle ; la première portion centrale étant apte à s'encastrer autour du bord externe du corps du bloc filtrant ; et un renfort supérieur, comprenant une deuxième portion périphérique et une deuxième portion centrale, continues l'une par rapport à l'autre ; lesdites deuxième portions périphérique et centrale étant sensiblement planes, sensiblement parallèles entre elles et séparées par une deuxième distance non nulle.

Un tel assemblage pour amortisseur est soumis à des contraintes structurelles importantes et nécessite une mise au point minutieuse, dépendant notamment du niveau d'efforts de suspension subis par le véhicule.

En particulier, les solutions existantes donnant de bons résultats pour les niveaux d'efforts importants présentent un poids et un coût élevé, ce qui dégrade leurs performances dans le cadre de niveaux d'efforts plus faibles.

La présente invention a pour but de proposer un assemblage pour amortisseur conduisant à une transmission d'effort optimale à la structure du véhicule.

A cet effet, l'invention a pour objet un assemblage du type précité, configuré de sorte que dans une configuration assemblée : le bloc filtrant, la coupelle et le renfort supérieur sont fixés les uns aux autres, chacun dudit bloc filtrant, de ladite coupelle et dudit renfort supérieur étant disposé autour d'un même axe principal ; la coupelle est disposée entre le bloc filtrant et le renfort supérieur selon l'axe principal ; les première et deuxième portions périphériques sont au contact l'une de l'autre ; et les première et deuxième portions centrales sont au contact l'une de l'autre ; chacune des première et deuxième portions centrales comportant : une zone principale, formant sensiblement un triangle équilatéral et comprenant un premier, un deuxième et un troisième sommets ; et une zone de fixation, disposée sensiblement à égale distance des premier et deuxième sommets et formant une saillie par rapport à la zone principale à l'opposé du troisième sommet.

Suivant d'autres aspects avantageux de l'invention, l'assemblage comporte l'une ou plusieurs des caractéristiques suivantes, prises isolément ou suivant toutes les combinaisons techniquement possibles :
- le renfort supérieur comprend en outre un bras, s'étendant perpendiculairement à l'axe principal depuis la deuxième portion périphérique ; l'assemblage comprenant en outre un renfort de traverse, au contact dudit bras du renfort supérieur, ledit renfort de traverse comprenant une surface de fixation, fixée à la zone de fixation de la deuxième portion centrale dudit renfort supérieur ;
- le bloc filtrant comprend un orifice central, centré sur l'axe principal ; et l'assemblage comprend en outre une jambe de force d'amortisseur, ladite jambe de force comprenant une tige s'étendant selon l'axe principal et assemblée à l'orifice central dudit bloc filtrant ;
- l'assemblage comprend en outre au moins une fixation traversant à la fois le bloc filtrant, la coupelle et le renfort supérieur ;
- dans la configuration assemblée, le corps du bloc filtrant et la première portion centrale du fond de la coupelle sont au contact l'un de l'autre ;
- l'assemblage comprend en outre un ensemble intercalaire, disposé entre le corps du bloc filtrant et le fond de la coupelle, ledit ensemble intercalaire étant au contact de chacune des premières portions périphérique et centrale dudit fond ;
- l'ensemble intercalaire comprend un premier et un deuxième éléments de soutien ; le premier élément de soutien comprenant une surface de contact apte à épouser la première portion périphérique du fond de coupelle ; le deuxième élément de soutien comprenant un contour sensiblement triangulaire, apte à s'encastrer dans la première portion centrale du fond de coupelle, ledit deuxième élément de soutien étant pris en sandwich entre le premier élément de soutien et ladite première portion centrale selon l'axe principal ;
- l'au moins une fixation traverse en outre les premiers et deuxième éléments de soutien.

L'invention se rapporte en outre à un véhicule comprenant : un châssis ; au moins une roue ; et au moins un assemblage pour amortisseur tel que décrit ci-dessus, ledit assemblage étant relié audit châssis et à ladite roue.

Suivant un aspect avantageux de l'invention, le châssis comprend une traverse ; et le bras du renfort supérieur et le renfort de traverse sont fixés à ladite traverse.

L'invention apparaîtra plus clairement à la lecture de la description qui va suivre, donnée uniquement à titre d'exemple non limitatif, et faite en référence aux dessins dans lesquels :
- la figure 1 représente un assemblage pour amortisseur selon un premier mode de réalisation de l'invention ;
- la figure 2 est une vue partielle, éclatée, de l'assemblage de la figure 1 ;
- la figure 3 est une vue en coupe de l'assemblage de la figure 1 ;
- la figure 4 est une vue partielle, éclatée, d'un assemblage pour amortisseur selon un deuxième mode de réalisation de l'invention ; et
- la figure 5 est une vue en coupe de l'assemblage de la figure 4.

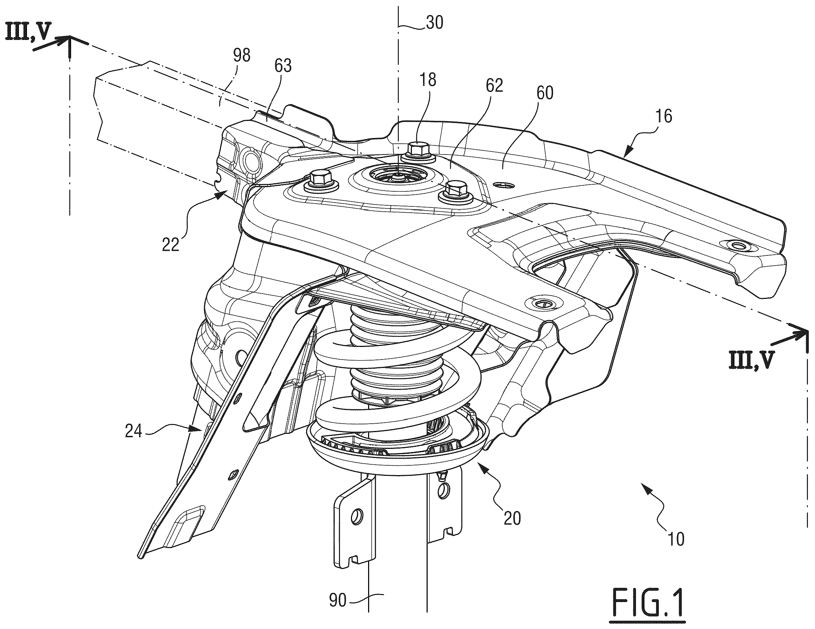

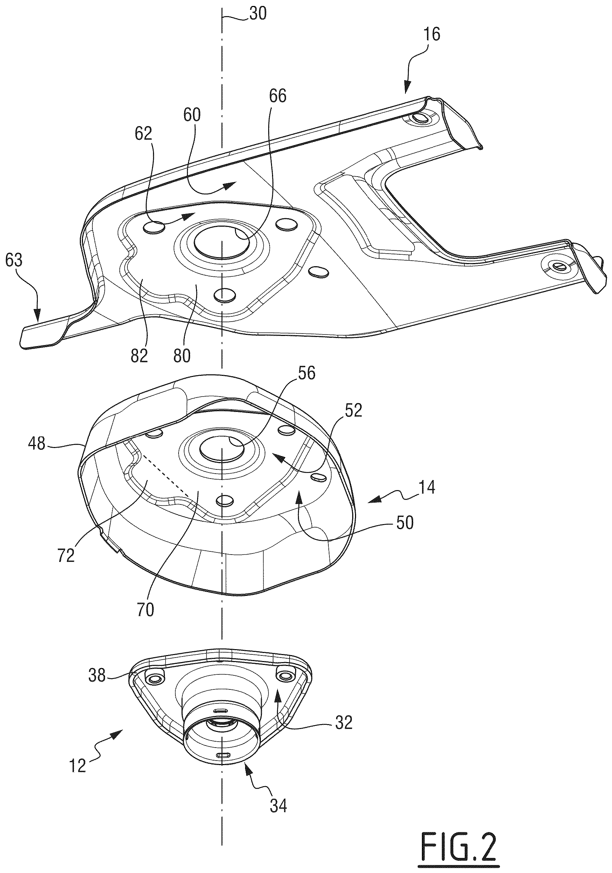

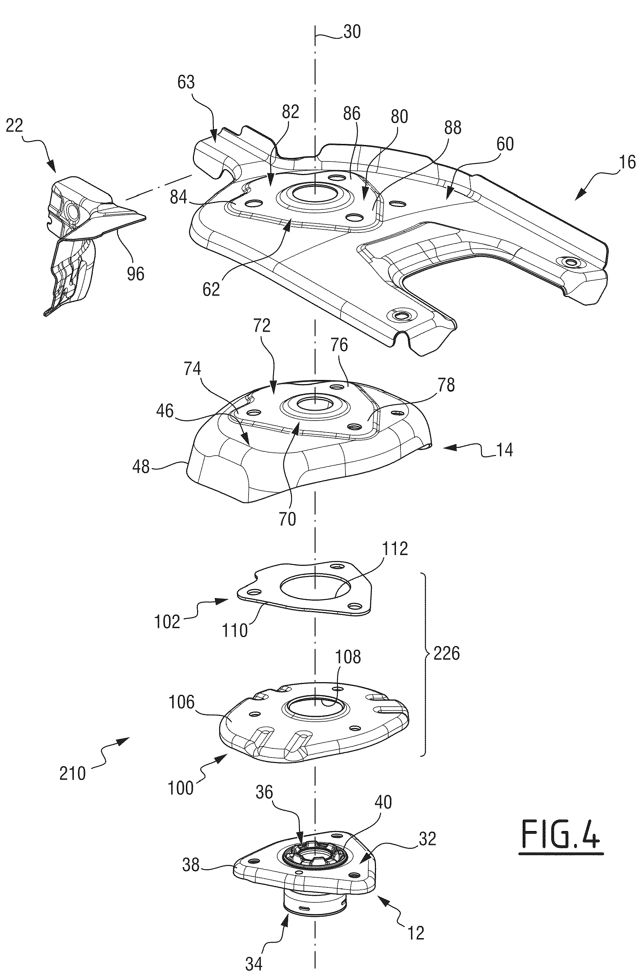

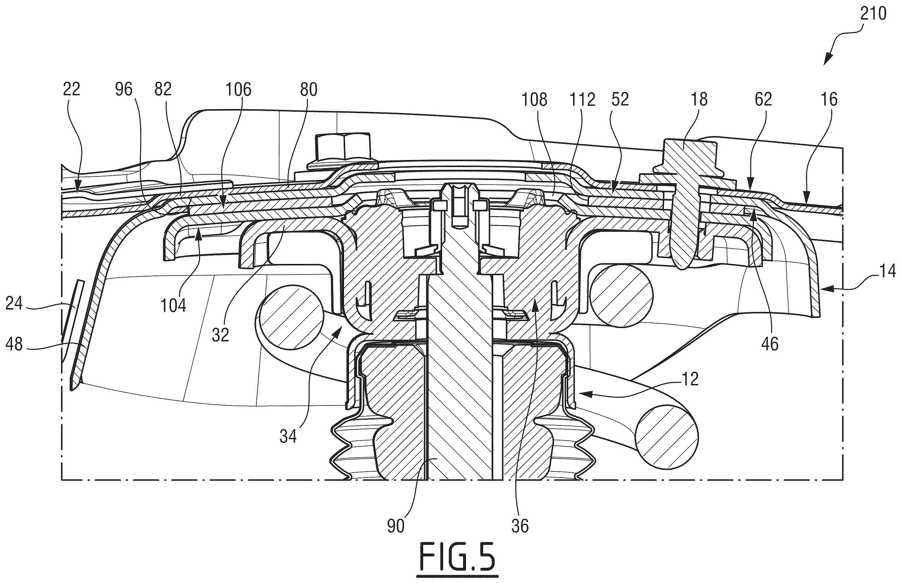

Les figure 1 à 3 représentent un assemblage 10 pour amortisseur, selon un premier mode de réalisation de l'invention. Les figures 4 et 5 représentent un assemblage 210 selon un deuxième mode de réalisation de l'invention. Les assemblages 10 et 210 comprennent des éléments communs.

De manière connue, chacun des assemblages 10 et 210 est destiné à être assemblé, d'une part à une caisse (non représentée), d'autre part à une roue (non représentée) d'un véhicule terrestre, notamment d'un véhicule automobile. En particulier, chacun des assemblages 10 et 210 est destiné à assurer une transmission d'efforts de suspension des roues vers la caisse dudit véhicule.

Les assemblages 10 et 210 seront décrits simultanément ci-après, les éléments communs étant désignés par les mêmes numéros de référence.

L'assemblage 10, 210 comprend : un bloc filtrant 12 ; une coupelle 14 d'amortisseur ; et un renfort supérieur 16. Dans les modes de réalisation représentés, l'assemblage comprend en outre : au moins une fixation 18 ; une jambe de force 20 d'amortisseur ; un renfort de traverse 22 ; et une réhausse de coupelle 24.

Dans le mode de réalisation des figures 4 et 5, l'assemblage 210 comprend en outre un ensemble intermédiaire 226.

Dans une configuration assemblée, visible sur les figures 1, 3 et 5, l'assemblage 10, 210 s'étend selon un axe principal 30. Dans une position de fonctionnement de l'assemblage 10, 210, l'axe principal 30 est sensiblement vertical. Dans la description qui suit, les termes « supérieur », « inférieur », « haut », « bas »... se réfèrent à la position de fonctionnement de l'assemblage 10, 210.

Le bloc filtrant 12 comprend un corps supérieur 32, un corps inférieur 34 et un organe d'amortissement 36.

Le corps supérieur 32 est sensiblement plan et sensiblement perpendiculaire à l'axe principal 30. Le corps supérieur 32 comprend un bord externe 38 formant sensiblement un triangle équilatéral et centré sur l'axe principal 30.

En outre, le corps supérieur 32 comprend un orifice central 40, centré sur l'axe principal 30 et de contour sensiblement circulaire.

Le corps inférieur 34 est tubulaire et s'étend selon l'axe principal 30, entre une extrémité supérieure et une extrémité inférieure. L'extrémité supérieure dudit corps inférieur 34 est solidaire du corps supérieur 32 et entoure l'orifice central 40.

Le corps inférieur 34 comporte une cloison intermédiaire 42, sensiblement perpendiculaire à l'axe principal 30. La cloison intermédiaire 42 comprend un orifice intermédiaire 44, centré sur l'axe principal et de diamètre inférieur à l'orifice central 40 du corps supérieur 32.

L'organe d'amortissement 36 est logé dans le corps inférieur 34, au-dessus de la cloison intermédiaire 42. L'orifice central 40 du corps supérieur 32 débouche sur ledit organe d'amortissement 36.

La coupelle 14 comprend un fond 46 et un bord 48. Le fond 46 est sensiblement plan et sensiblement perpendiculaire à l'axe principal 30. Le bord 48 s'étend vers le bas à partir d'une périphérie du fond 46.

Plus précisément, le fond 46 de la coupelle 14 comprend une première portion périphérique 50 et une première portion centrale 52, continues l'une par rapport à l'autre. La première portion périphérique 50 est disposée autour de la première portion centrale 52.

Lesdites premières portions périphérique 50 et centrale 52 sont sensiblement planes, sensiblement parallèles entre elles et séparées par une première distance 54 non nulle. Lesdites premières portions périphérique 50 et centrale 52 sont sensiblement perpendiculaires à l'axe principal 30 et disposées autour dudit axe principal.

Comme précisé ci-après, la première portion centrale 52 est apte à s'encastrer autour du bord externe 38 du corps supérieur 32 du bloc filtrant 12.

De préférence, le fond 46 de la coupelle 14 est formé d'une tôle comprenant un emboutissage qui définit les premières portions périphérique 50 et centrale 52.

Dans le mode de réalisation représenté, le fond 46 de la coupelle 14 comprend en outre une première ouverture centrale 56, centrée sur l'axe principal 30 et ménagée dans la première portion centrale 52.

Le renfort supérieur 16 comprend une deuxième portion périphérique 60 et une deuxième portion centrale 62, continues l'une par rapport à l'autre. Dans le mode de réalisation représenté, le renfort supérieur 16 comprend en outre un bras 63.

La deuxième portion périphérique 60 est disposée autour de la deuxième portion centrale 62. Les deuxièmes portions périphérique 60 et centrale 62 sont sensiblement planes, sensiblement parallèles entre elles et séparées par une deuxième distance 64 non nulle, sensiblement égale à la première distance 54. De préférence, le renfort supérieur 16 est formé d'une tôle comprenant un emboutissage qui définit les deuxièmes portions périphérique 60 et centrale 62.

Les deuxièmes portions périphérique 60 et centrale 62 sont sensiblement perpendiculaires à l'axe principal 30 et disposées autour dudit axe principal.

Comme précisé ci-après, la deuxième portion centrale 62 présente une forme analogue à celle de la première portion centrale 52 du fond 46 de la coupelle 14, ladite deuxième portion centrale 62 étant apte à s'encastrer sur ladite première portion centrale 52.

Le bras 63 s'étend de manière sensiblement rectiligne depuis la deuxième portion périphérique 60, sensiblement perpendiculairement à l'axe principal 30.

Dans le mode de réalisation représenté, le renfort supérieur 16 comprend en outre une deuxième ouverture centrale 66, centrée sur l'axe principal 30 et ménagée dans la deuxième portion centrale 62.

La première portion centrale 52 du fond 46 de la coupelle 14 va à présent être décrite plus précisément.

La première portion centrale 52 comprend une première zone principale 70 et une première zone de fixation 72.

La première zone principale 70 forme sensiblement un triangle équilatéral et comprend un premier 74, un deuxième 76 et un troisième 78 sommets. La première zone de fixation 72 a la forme d'une languette, disposée sensiblement à égale distance des premier 74 et deuxième 76 sommets et formant une saillie par rapport à la première zone principale 70, à l'opposé du troisième sommet 78.

La deuxième portion centrale 62 du renfort supérieur 16 va à présent être décrite plus précisément.

La deuxième portion centrale 62 comprend une deuxième zone principale 80 et une deuxième zone de fixation 82.

La deuxième zone principale 80 forme sensiblement un triangle équilatéral et comprend un quatrième 84, un cinquième 86 et un sixième 88 sommets. La deuxième zone de fixation 82 a la forme d'une languette, disposée sensiblement à égale distance des quatrième 84 et cinquième 86 sommets et formant une saillie par rapport à la deuxième zone principale 80, à l'opposé du sixième sommet 88.

La deuxième zone de fixation 82 de la deuxième portion centrale 62 est sensiblement disposée en vis-à-vis du bras 63 du renfort supérieur 16. Plus précisément, la deuxième zone de fixation 82 est disposée sensiblement entre ledit bras 63 et la deuxième zone principale 80 de la deuxième portion centrale 62.

Dans la configuration assemblée des figures 1, 3 et 5, le bloc filtrant 12, la coupelle 14 et le renfort supérieur 16 sont fixés les uns aux autres. Par exemple, l'au moins une fixation 18 est de type vis et traverse à la fois le bloc filtrant 12, la coupelle 14 et le renfort supérieur 16. Dans les modes de réalisation représentés, l'assemblage 10, 210 comporte trois fixations 18, réparties autour de l'axe principal 30. Lesdites fixations 18 traversent le corps supérieur 32 du bloc filtrant 12 et les première 52 et deuxième 62 parties centrales du fond 46 de la coupelle et du renfort supérieur 16.

Par ailleurs, dans la configuration assemblée, la coupelle 14 est disposée entre le bloc filtrant 12 et le renfort supérieur 16 selon l'axe principal 30. Les première 56 et deuxième 66 ouvertures centrales de la coupelle 14 et du renfort supérieur 16 ouvrent sur l'orifice central 40 du corps supérieur 32 du bloc filtrant 12.

En particulier, dans la configuration assemblée, la première partie centrale 52 du fond 46 de la coupelle est encastrée sur le corps supérieur 32 du bloc filtrant 12. Plus précisément, dans la configuration assemblée, un contour de la première zone principale 70 de la première partie centrale 52 est en vis-à-vis du bord externe 38 triangulaire du corps supérieur 32.

L'encastrement de la première partie centrale 52 du fond 46 de la coupelle sur le corps supérieur 32 du bloc filtrant 12 sera décrit plus en détail ci-après, pour chacun des assemblages 10 et 210.

En outre, dans la configuration assemblée, la deuxième partie centrale 62 du renfort supérieur 16 est encastrée sur la première partie centrale 52 du fond 46 de la coupelle. Plus précisément, dans la configuration assemblée, les première 50 et deuxième 60 portions périphériques sont au contact l'une de l'autre ; et les première 52 et deuxième 62 portions centrales sont au contact l'une de l'autre. Encore plus précisément, les première 70 et deuxième 80 zones principales desdites portions centrales sont au contact l'une de l'autre et les première 72 et deuxième 82 zones de fixation desdites portions centrales sont au contact l'une de l'autre.

La jambe de force 20 d'amortisseur comprend notamment une tige 90, s'étendant selon l'axe principal 30 entre une extrémité supérieure 92 et une extrémité inférieure. L'extrémité supérieure 92 de la tige 90 est assemblée au bloc filtrant 12. Plus précisément, ladite extrémité supérieure 92 traverse l'orifice intermédiaire 44 de la cloison intermédiaire 42 du corps inférieur 34 et est fixée à l'organe d'amortissement 36, par exemple à l'aide d'un écrou 94 à rondelle.

Le renfort de traverse 22 est assemblé au bras 63 du renfort supérieur 16 et à la deuxième portion périphérique 60 dudit renfort supérieur, à proximité du bras 63.

Le renfort de traverse 22 comprend une surface de fixation 96, sensiblement plane et en forme de languette. En configuration assemblée, ladite surface de fixation 96 est fixée à la deuxième zone de fixation 82 de la deuxième portion centrale 62 du renfort supérieur 16. De préférence, ladite surface de fixation 96 et ladite deuxième zone de fixation 82 sont fixées l'une à l'autre par des points de soudure.

Le bras 63 du renfort supérieur 16 est notamment destiné à être fixé à une traverse 98, représentée en pointillés sur la figure 1. La traverse 98 fait partie de la caisse (non représenté) du véhicule intégrant l'assemblage 10, 210.

Le renfort de traverse 22 est également destiné à être fixé à la traverse 98. Les points de soudure entre la surface de fixation 96 du renfort de traverse 22 et la deuxième zone de fixation 82 du renfort supérieur 16 permettent une meilleure transmission des efforts de la jambe de force 20 vers la caisse du véhicule. La résistance de l'assemblage 10, 210 aux efforts de fonctionnement est ainsi améliorée.

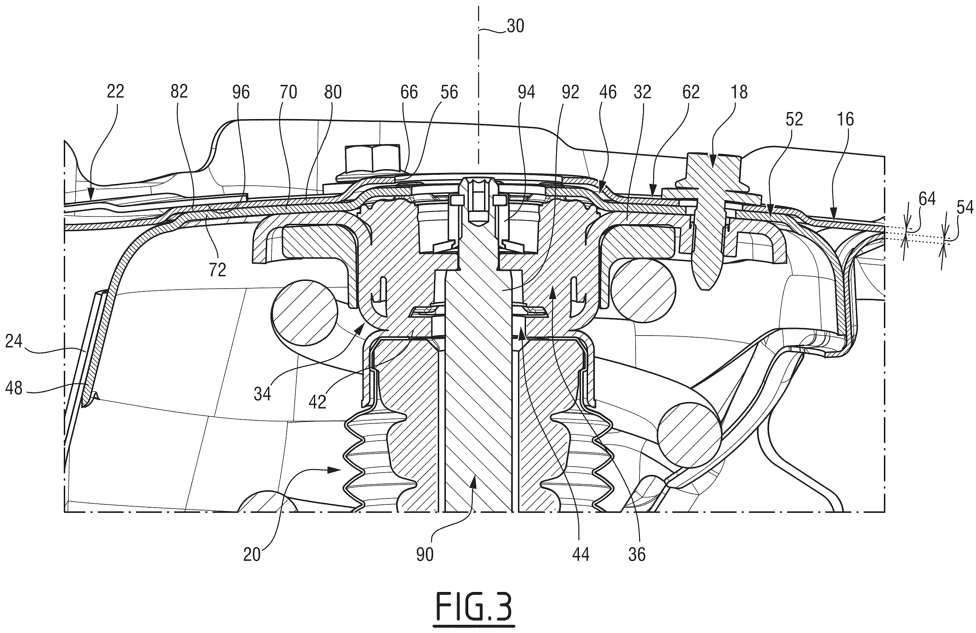

La réhausse de coupelle 24 est assemblée au bord 48 de la coupelle 14, comme visible sur les figures 3 et 5.

Les différences entre les assemblages 10 et 210 décrits ci-dessus vont maintenant être décrites plus précisément, concernant l'encastrement de la première partie centrale 52 du fond 46 de la coupelle sur le corps supérieur 32 du bloc filtrant 12.

Dans la configuration assemblée de l'assemblage 10, la première partie centrale 52 du fond 46 de la coupelle est au contact du corps supérieur 32 du bloc filtrant 12, comme visible sur la figure 3. Un tel assemblage 10 est adapté à un véhicule automobile de poids modéré et/ou exposé à des efforts de suspension modérés.

Dans l'assemblage 210, l'ensemble intercalaire 226 est disposé entre le corps supérieur 32 du bloc filtrant 12 et le fond 46 de la coupelle 14. Plus précisément, l'ensemble intercalaire 226 est pris en sandwich entre ledit corps supérieur 32 du bloc filtrant et ledit fond 46 de la coupelle.

En particulier, ledit ensemble intercalaire 226 est au contact de chacune des premières portions périphérique 50 et centrale 52 du fond 46 de la coupelle 14, pour une transmission optimale des efforts. Un tel assemblage 210 est notamment adapté à un véhicule automobile de poids élevé et/ou exposé à des efforts de suspension élevés.

Dans le mode de réalisation représenté, l'ensemble intercalaire comprend un premier 100 et un deuxième 102 éléments de soutien, amovibles l'un par rapport à l'autre.

Le premier élément de soutien 100 est sensiblement plan et perpendiculaire à l'axe principal 30. Dans le mode de réalisation représenté, le premier élément de soutien 100 comprend notamment : une surface inférieure 104 ; une surface supérieure 106 ; et une troisième ouverture centrale 108, centrée sur l'axe principal 30.

Dans la configuration assemblée visible à la figure 5, les surfaces inférieure 104 et supérieure 106 du premier élément de soutien 100 sont au contact, respectivement, du corps supérieur 32 du bloc filtrant 12 et de la première portion périphérique 50 du fond 46 de la coupelle 14.

Le deuxième élément de soutien 102 est sensiblement plan et perpendiculaire à l'axe principal 30. Le deuxième élément de soutien 102 comprend un contour 110 sensiblement triangulaire, apte à s'encastrer dans la première portion centrale 52 du fond 46 de coupelle. En particulier, une épaisseur du deuxième élément de soutien 102 est sensiblement égale à la première distance 54 entre les premières portions périphérique 50 et centrale 52 dudit fond 46.

De préférence, comme dans le mode de réalisation représenté, le contour 110 du deuxième élément de soutien 102 est configuré pour s'encastrer à la fois dans la première zone principale 70 et dans la première zone de fixation 72 de la première portion centrale 52 du fond 46 de coupelle.

Le deuxième élément de soutien 102 comprend en outre une quatrième ouverture centrale 112, centrée sur l'axe principal 30.

Dans la configuration assemblée visible à la figure 5, le deuxième élément de soutien 102 est au contact de la surface supérieure 106 du premier élément de soutien 100 et pris en sandwich entre ledit premier élément de soutien 100 et la première portion centrale 52 selon l'axe principal 30.

Par ailleurs, dans ladite configuration assemblée, les troisième 108 et quatrième 112 ouvertures centrales ouvrent sur l'orifice central 40 du corps supérieur 32 du bloc filtrant 12.

Par ailleurs, dans ladite configuration assemblée, les fixations 18 traversent également les premier 100 et deuxième 102 éléments de soutien.

De préférence, dans le mode de réalisation représenté, le deuxième élément de soutien 102 est en outre fixé à la coupelle 14 et/ou au premier élément de soutien 100 par des points de soudure.

Ainsi, à l'exception de l'ensemble intercalaire 226, les assemblages 10 et 210 sont formés d'éléments identiques. L'assemblage 10, 210 décrit ci-dessus peut donc être facilement adapté au modèle du véhicule correspondant, selon qu'il s'agit d'un véhicule associé à des efforts de suspension modérés ou élevés.

L'assemblage 10, 210 est donc résistant aux efforts de fonctionnement, polyvalent et facilement optimisable en poids et en coût, selon le véhicule auquel il est intégré.

## Revendications

1. Assemblage (10, 210) pour amortisseur de véhicule automobile, comprenant :
- un bloc filtrant (12), comprenant un corps (32) sensiblement plan, ledit corps comprenant un bord externe (38) formant sensiblement un triangle équilatéral ;
- une coupelle (14) d'amortisseur, comprenant un fond (46) de coupelle ; ledit fond comprenant une première portion périphérique (50) et une première portion centrale (52), continues l'une par rapport à l'autre ; lesdites premières portions périphérique et centrale étant sensiblement planes, sensiblement parallèles entre elles et séparées par une première distance (54) non nulle ; la première portion centrale (52) étant apte à s'encastrer autour du bord externe (38) du corps du bloc filtrant (12) ; et
- un renfort supérieur (16), comprenant une deuxième portion périphérique (60) et une deuxième portion centrale (62), continues l'une par rapport à l'autre ; lesdites deuxième portions périphérique et centrale étant sensiblement planes, sensiblement parallèles entre elles et séparées par une deuxième distance (64) non nulle ;
l'assemblage étant configuré de sorte que dans une configuration assemblée : le bloc filtrant (12), la coupelle (14) et le renfort supérieur sont fixés les uns aux autres, chacun dudit bloc filtrant, de ladite coupelle et dudit renfort supérieur étant disposé autour d'un même axe principal (30) ; la coupelle (14) est disposée entre le bloc filtrant (12) et le renfort supérieur (16) selon l'axe principal ; les première (50) et deuxième (60) portions périphériques sont au contact l'une de l'autre ; et les première (52) et deuxième (62) portions centrales sont au contact l'une de l'autre ;
chacune des première (52) et deuxième (62) portions centrales comportant : une zone principale (70, 80), formant sensiblement un triangle équilatéral et comprenant un premier (74, 84), un deuxième (76, 86) et un troisième (78, 88) sommets ; et une zone de fixation (72, 82), disposée sensiblement à égale distance des premier et deuxième sommets et formant une saillie par rapport à la zone principale à l'opposé du troisième sommet.

2. Assemblage selon la revendication 1, dans lequel le renfort supérieur (16) comprend en outre un bras (63), s'étendant perpendiculairement à l'axe principal depuis la deuxième portion périphérique (60) ; l'assemblage comprenant en outre un renfort de traverse (22), au contact dudit bras (63) du renfort supérieur, ledit renfort de traverse comprenant une surface de fixation (96), fixée à la zone de fixation (82) de la deuxième portion centrale (62) dudit renfort supérieur (16).

3. Assemblage selon la revendication 1 ou 2, dans lequel le bloc filtrant comprend un orifice central (40, 44), centré sur l'axe principal (30) ; et l'assemblage comprend en outre une jambe de force (20) d'amortisseur, ladite jambe de force comprenant une tige (90) s'étendant selon l'axe principal et assemblée à l'orifice central dudit bloc filtrant.

4. Assemblage (10, 210) selon l'une des revendications précédentes, comprenant en outre au moins une fixation (18) traversant à la fois le bloc filtrant (12), la coupelle (14) et le renfort supérieur (16).

5. Assemblage (10) selon l'une des revendications précédentes, dans lequel, dans la configuration assemblée, le corps (32) du bloc filtrant (12) et la première portion centrale (52) du fond (46) de la coupelle (14) sont au contact l'un de l'autre.

6. Assemblage (210) selon l'une des revendications 1 à 3, comprenant en outre un ensemble intercalaire (226), disposé entre le corps (32) du bloc filtrant (12) et le fond (46) de la coupelle (14), ledit ensemble intercalaire étant au contact de chacune des premières portions périphérique (50) et centrale (52) dudit fond.

7. Assemblage (210) selon la revendication 6, dans lequel l'ensemble intercalaire (226) comprend un premier (100) et un deuxième (102) éléments de soutien ; le premier élément de soutien comprenant une surface de contact (106) apte à épouser la première portion périphérique (50) du fond (46) de coupelle ; le deuxième élément de soutien (102) comprenant un contour (110) sensiblement triangulaire, apte à s'encastrer dans la première portion centrale (52) du fond (46) de coupelle, ledit deuxième élément de soutien étant pris en sandwich entre le premier élément de soutien et ladite première portion centrale selon l'axe principal (30).

8. Assemblage (210) selon la revendication 7 prise en combinaison avec la revendication 4, dans lequel l'au moins une fixation traverse en outre les premiers (100) et deuxième (102) éléments de soutien.

9. Véhicule comprenant : un châssis ; au moins une roue ; et au moins un assemblage (10, 210) pour amortisseur selon l'une des revendications précédentes, ledit assemblage étant relié audit châssis et à ladite roue.

10. Véhicule selon la revendication 9, dans lequel : le châssis comprend une traverse (98) ; et l'assemblage (10, 210) est selon la revendication 2, le bras (63) du renfort supérieur (16) et le renfort de traverse (22) étant fixés à ladite traverse.
